# EUROPÄISCHE PATENTSCHRIFT

(11) **EP 0 936 956 B1**
(45) Veröffentlichungstag und Bekanntmachung des Hinweises auf die Patenterteilung: **26.03.2003**
(21) Anmeldenummer: 97911043.4
(22) Anmeldetag: 04.11.1997
(51) Int. Cl.: B23K 11/25, B23K 11/24

(54) **VERFAHREN UND ANORDNUNG ZUM ERZEUGEN VON SCHWEISSSTROM FÜR EINE WIDERSTANDSSCHWEISSMASCHINE**
PROCESS AND DEVICE FOR GENERATING A WELDING CURRENT FOR A RESISTANCE WELDING MACHINE
PROCEDE ET DISPOSITIF GENERATEURS DE COURANT DE SOUDAGE POUR UNE MACHINE A SOUDER PAR RESISTANCE

(30) Priorität: 08.11.1996 AT 196196
(43) Veröffentlichungstag der Anmeldung: 25.08.1999
(73) Patentinhaber: EVG Entwicklungs- u. Verwertungs- Gesellschaft m.b.H., A-8074 Raaba (AT)
(72) Erfinder: RITTER, Klaus, A-8042 Graz (AT); RITTER, Gerhard, A-8043 Graz (AT); JAHRBACHER, Gert, -- (AT)
(74) Vertreter: Holzer, Walter, Dipl.-Ing.
(86) Internationale Anmeldenummer: AT9700235
(87) Internationale Veröffentlichungsnummer: WO98021001

(56) Entgegenhaltungen:
- EP-A- 0 502 478
- EP-A- 0 560 711
- EP-A- 0 688 626
- US-A- 5 072 090
- US-A- 5 416 288

## Beschreibung

Die Erfindung betrifft ein Verfahren zum Erzeugen eines sinusförmigen, periodisch wechselnden Schweißstromes hoher Leistungsdichte für eine mit einphasigem Wechselstrom zu betreibende Vielpunkt-Widerstandsschweißmaschine, wobei der Schweißstrom mit Hilfe einer pulsphasigen Netzspannungsquelle erzeugt wird. Gegenstand der Erfindung ist ferner eine Vielpunkt-Widerstandsschweißmaschine zur Durchführung des Verfahrens. Die gattung zeigt der US-A-5 416 288.

Aus der EP-0 502 478 ist ein Verfahren zum Widerstandsschweißen mit in periodischen Halbwellen pulsierendem, insbesondere wechselndem Schweißstrom bekannt, welcher aus einer Primärwechselspannung eines Schweißstromtransformators und durch Pulsdauermodulation derselben erzeugt wird. Hierbei wird die Primärwechselspannung des Schweißtransformators bei der Pulsdauermodulation in jeder Halbwelle n-fach zerhackt und der Schweißstrom in jeder Halbwelle dadurch geregelt, daß n Sollwertvergleiche des Schweißstromes durchgeführt und entsprechend häufig auf das Tastverhältnis der Pulsdauermodulation eingewirkt wird.

Dieses Verfahren hat den Nachteil, daß es nur für wechselnden nicht-sinusförmigen Schweißstrom mit geringer Leistungsdichte einsetzbar ist.

Aufgabe der Erfindung ist es, die geschilderten Nachteile der bekannten Steuerung zu vermeiden und beim Widerstandschweißen mit einem Schweißstrom großer Leistungsdichte, der sowohl große Werte über eine längere Dauer als auch extrem hohe Spitzenwerte mit kurzer Impulsdauer aufweisen kann, eine symmetrische Belastung der Netzspannungsquelle und eine geringe Bildstromaufnahme zu ermöglichen. Das erfindungsgemäße Verfahren zeichnet sich dadurch aus, daß im Bereich zwischen der Frequenz der Netzspannungsquelle und dem Vierfachen derselben gewählt wird, und daß dem pulsbreitenmodulierten Ansteuersignale für die Wechselrichterschaltung eine symmetrische Form erteilt wird, wobei zu Beginn jeder Halbwelle des sinusförmigen Schweißstromes die Pulsbreite groß ist und gegen Ende der Halbwelle die Pulsbreite des Ansteuersignals abnimmt.

Der Vorteil des erfindungsgemäßen Verfahrens liegt unter anderem darin, daß unabhängig von der Netzspannung und deren Phasenlage eine optimale Anpassung an die Erfordernisse einer Vielpunkt-Widerstandsschweißmaschine möglich ist. Die unabhängige Ansteuerung der einzelnen Wechselrichter und damit der dazugehörigen Schweißstromtransformatoren erlaubt es außerdem, innerhalb einer Gittermatte unterschiedliche Materialdimensionen mit jeweils günstigsten Schweißstrom- und Schweißzeitparametern zu verschweißen.

Gegenstand der Erfindung ist ferner eine Vielpunkt-Widerstandsschweißmaschine gemäß Anspruch 3.

Eine andere erfindungsgemäße Vielpunkt-Widerstandsschweißmaschine mit Schweißströmen hoher Impulse und kurzer Dauer hat die Merkmale, daß zur gleichmäßigen Netzbelastung die Schweißenergie in Form des Schweißstromes unmittelbar und überwiegend aus einem Zwischenkreiskondensator entnommen wird, der gegenüber der üblichen Auslegung des Zwischenkreiskondensators als Glättungkondensator eine verdreifachte Ladekapazität aufweist.

Eine Weiterbildung der erfindungsgemäßen Vielpunkt-Widerstandsschweißmaschine mit einer großen Anzahl von Schweißelektrodenpaaren zum Herstellen von engmaschigen Drahtgittermatten hat die Merkmale, daß die Schweißelektrodenpaare gruppenweise zusammenfaßbar sind, daß für die Entnahme des Schweißstromes jeder Gruppe je ein Zwischenkreiskondensator vorgesehen ist und daß jedem Zwischenkreiskondensator ein separat ansteuerbarer Wechselrichter und ein Schweißtransformator zugeordnet ist.

Weitere Merkmale und Vorteile der Erfindung werden nachfolgend an Ausführungsbeispielen unter Bezugnahme auf die Zeichnungen näher erläutert. Es zeigen:
Fig. 1 ein schematisches Schaltbild einer erfindungsgemäßen Schweißstromsteuerung für eine Gitterrost-Schweißmaschine;
Fig. 2 den zeitlichen Verlauf eines pulsbreitenmodulierten Steuersignals und des entsprechenden, sinusförmigen Schweißstromes der Schweißstromsteuerung nach Fig. 1;
Fig. 3 ein schematisches Schaltbild einer erfindungsgemäßen Schweißstromsteuerung für eine Drahtgittermatten-Schweißmaschine;
Fig. 4 den zeitlichen Verlauf der Zwischenkreisspannung und des entsprechenden Schweißstromes der Schweißstromsteuerung nach Fig. 3, und
Fig. 5 eine detailliertere Darstellung der in den Fig. 1 und 3 schematisch dargestellten Schaltkreise.

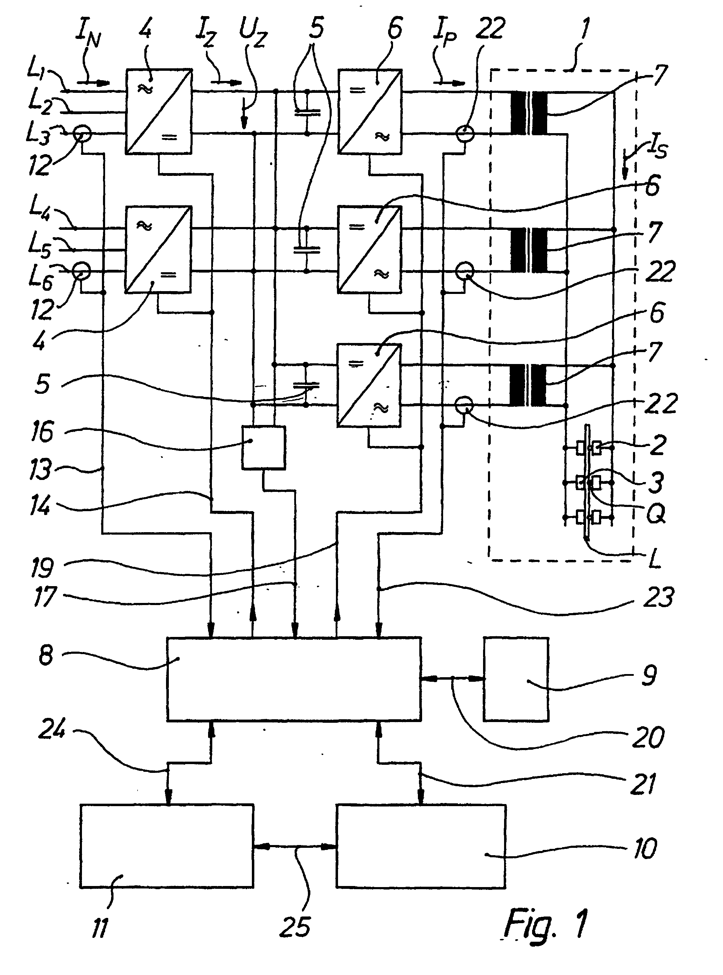

Fig. 1 zeigt ein schematisches Schaltbild einer erfindungsgemäßen Anordnung zum Erzeugen eines nahezu sinusförmigen, einphasigen Schweißstromes großer Leistungsdichte für eine Vielpunkt-Widerstandsschweißmaschine 1 zum Herstellen von aus Längselementen L, beispielsweise Flachbändern aus Bewehrungsstahl, und senkrecht zu diesen angeordneten Querelementen Q, beispielsweise Rundstäben aus Bewehrungsstahl, bestehenden Gitterrosten. Die Längselemente L und die Querstäbe Q werden an ihren Kreuzungspunkten in der Gitterrostschweißmaschine 1 mit Hilfe von mehreren in Linie angeordneten oberen Schweißelektroden 2 und entsprechenden unteren Schweißelektroden 3 miteinander verschweißt. Die einander jeweils gegenüberliegenden oberen und unteren Schweißelektroden 2 bzw. 3 bilden ein Schweißelektrodenpaar.

Die in Fig. 1 dargestellte erfindungsgemäße Anordnung zum Erzeugen des Schweißstromes großer Leistungsdichte weist im wesentlichen einen dreiphasigen, zweifach ausgeführten Netzanschluß L1, L2, L3; L4, L5, L6, zwei Eingangsgleichrichter 4, drei Zwischenkreiskondensatoren 5, drei Wechselrichter 6, drei Schweißstromtransformatoren 7, einen Steuerungsrechner 8, einen Schweißfrequenzoszillator 9, einen Eingaberechner 10 und eine Maschinensteuerung 11 auf.

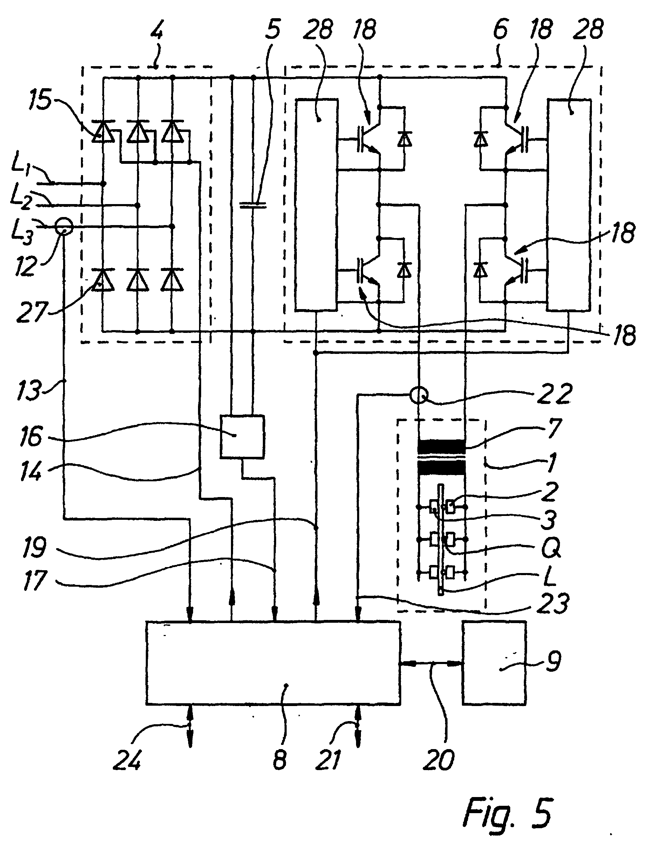

Jeder gesteuerte Eingangsgleichrichter 4 wandelt die dreiphasige Netzspannung L1, L2, L3 bzw. L4, L5, L6 in eine Gleichspannung um, die mittels Zwischenkreiskondensator 5 geglättet wird. Eine Strommeßeinrichtung 12 gibt über eine Meßleitung 13 den Netzstrom I_{N} an den Steuerungsrechner 8 weiter. Da beim Einschalten des Wechselrichters 6 der Ladestrom I_{Z} für den Zwischenkreiskondensator 5 einen unzulässig hohen Wert annehmen würde, begrenzt der Steuerungsrechner 8 durch Verschieben der Zündimpulse 14 für die Thyristoren 15 (Fig. 5) im Eingangsgleichrichter 4 den Strom I_{Z}. Eine Meßeinrichtung 16 erfaßt die Zwischenkreisspannung U_{Z} und meldet diese über eine Meßleitung 17 dem Steuerungsrechner 8.

Um den Oberwellenanteil des Netzstromes I_{N} gering zu halten, ist es vor allem bei größeren Anschlußleistungen zweckmäßig, einen zweiten Eingangsgleichrichter 4 vorzusehen, wobei die Anspeisung vom Netz L1, L2, L3, L4, L5, L6 von einem Doppelstocktransformator erfolgt.

Durch den Wechselrichter 6 wird der vom Eingangsgleichrichter 4 erzeugte Gleichstrom I_{Z} in einen primären Schweißstrom I_{P} umgewandelt, dessen Frequenz vom Schweißfrequenzoszillator 9 gesteuert wird, und die größer als die Netzfrequenz ist und im Bereich zwischen der Netzfrequenz und dem Vierfachen derselben liegt. Als besonders vorteilhaft hat sich eine Schweißfrequenz erwiesen, die das Dreifache der Netzfrequenz beträgt.

Als Wechselrichter 6 wird eine aus vier IGBT-Leistungstransistoren 18 (Fig. 5) gebildete H-Brückenschaltung verwendet. Der Steuerungsrechner 8 liefert für den Wechselrichter 6 ein Ansteuersignal 19, das als pulsbreitenmodifiziertes Signal zur Erzielung des gewünschten, sinusförmigen Schweißstrom I_{P} notwendig ist. Der Steuerungsrechner 8 erhält über eine Datenleitung 20 vom Schweißfrequenzoszillator 9 die erforderliche Vorgabe für die Frequenz und Kurvenform des primären Schweißstroms I_{P}. Bei der Ermittlung des Ansteuersignals 19 wird das vom Eingaberechner 10 über eine Datenleitung 21 an den Steuerungsrechner 8 weitergeleitete Schweißprogramm berücksichtigt. Das frei wählbare Schweißprogramm wird in den Eingaberechner 10 eingegeben und legt die Größe, den Verlauf sowie die Dauer des primären Schweißstroms I_{P} entsprechend dem zu verschweißenden Material und den herzustellenden Gitterrosttypen fest.

Eine Meßeinrichtung 22 erfaßt den primären Schweißstrom I_{P} und gibt diesen Meßwert über eine Meßleitung 23 an den Steuerungsrechner 8 weiter. Im Steuerungsrechner 8 wird der Istwert des primären Schweißstromes IP mit dem eingegebenen Sollwert verglichen, wobei die Differenz als Regelgröße das Ansteuerungsignal 19 für den Wechselrichter 6 beeinflußt. Der Steuerungsrechner 8 leitet über die Datenleitung 21 die erfaßten Meßwerte I_{N}, U_{Z}, I_{P} sowie auch etwaige Störungsmeldungen an den Eingaberechner 10 weiter.

Die Maschinensteuerung 11 löst über eine Datenleitung 24 die Schweißung aus und bekommt vom Steuerungsrechner 8 die Rückmeldung über korrekte Ausführung des Schweißablaufs, andernfalls wird die Schweißmaschine gestoppt. Die Maschinensteuerung 11 ist außerdem über eine Datenleitung 25 mit dem Eingaberechner 10 verbunden.

Speziell bei Widerstandsscnweißmaschinen für Gitterroste oder schwere Bewehrungsmatten, die einen hohen Leistungsbedarf haben, ist es notwendig, den zum Schweißen benötigten sekundären Schweißstrom I_{S} auf mehrere Schweißtransformatoren 7 aufzuteilen, beispielsweise, wie in Fig. 1 dargestellt, auf drei Schweißtransformatoren 7. Hierbei werden alle Schweißtransformatoren 7 sekundärseitig parallel geschaltet und jeder Schweißtransformator 7 von einem eigenen Wechselrichter 6 versorgt. Der Steuerungsrechner 8 übernimmt hierbei die Synchronisierung der Wechselrichter 6, ebenso überwacht er die richtige Stromaufteilung auf die einzelnen Schweißtransformatoren 7.

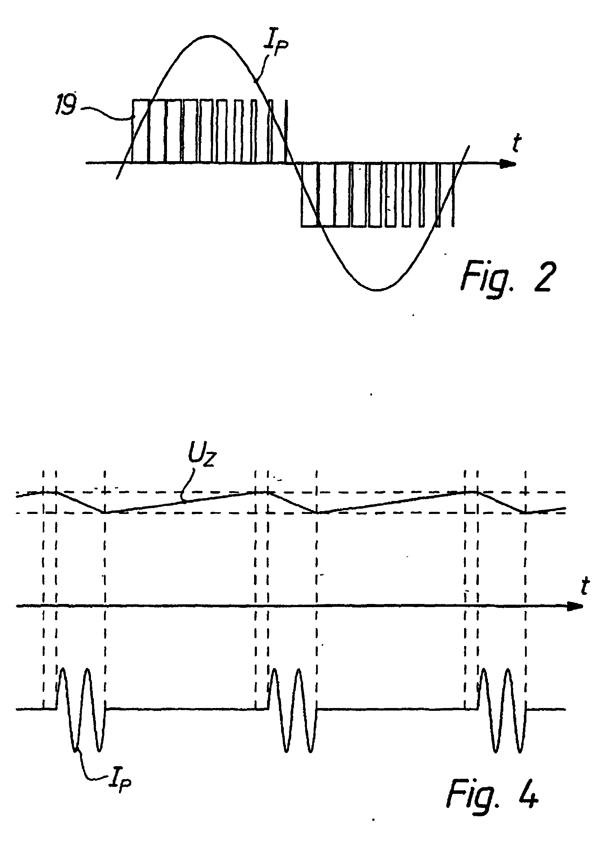

In Fig. 2 wird der Zusammenhang zwischen dem Ansteuersignal 19 für den Wechselrichter 6 und dem annähernd sinusförmigen, primären Schweißstrom I_{P} dargestellt. Dabei weist das vom Steuerungsrechner 8 gelieferte Ansteuersignal 19 eine bezogen auf die Stromhalbwelle unsymmetrische Form auf. Um pro Halbwelle jeweils einen möglichst steilen Anstieg des Schweißstromes I_{P} zu erreichen, muß zu Beginn eine möglichst volle Aussteuerung der IGBT-Leistungstransistoren 18 erfolgen. Gegen Ende der Halbwelle ist der Steuerbedarf nicht mehr so groß, so daß die Pulsbreite des Ansteuersignals 19 verringert werden kann. Die Sollwerte für die gewünschte Frequenz und Kurvenform des Schweißstromes I_{P} gibt der Schweißfrequenzoszillator 9 vor. Dies ist die Bedingung, daß man aufgrund der Induktivität im Schweißstromkreis die angestrebte Kurvenform des Schweißstromes I_{P} erreicht.

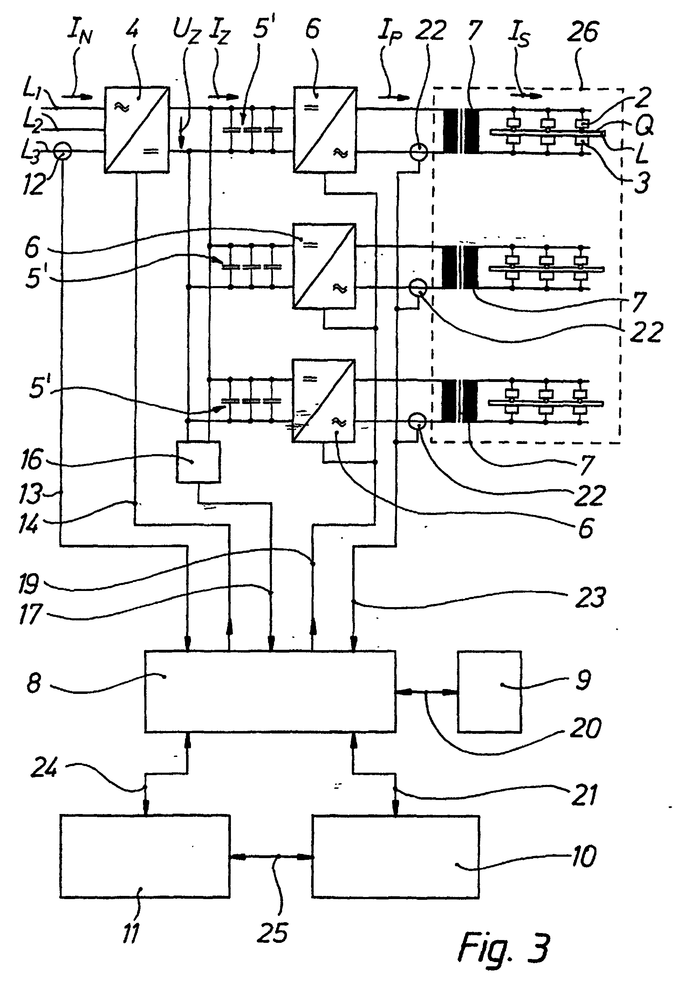

Die Fig. 3 zeigt ein weiteres Ausführungsbeispiel einer erfindungsgemäßen Anordnung zur Erzeugung von Schweißstrom großer Leistungsdichte. Diese Anordnung findet Anwendung bei einer Vielpunkt-Widerstandsschweißmaschine 26, deren Schweißströme IS hohe Stromimpulse mit kurzer Dauer aufweisen. Derartige Widerstandsschweißmaschinen dienen beispielsweise zum Herstellen von engmaschigen Gittermatten mit vorzugsweise kleinen Drahtstärken und sind mit einer großen Anzahl von Schweißelektrodenpaaren 2; 3 ausgestatteten. Dabei werden mehrere Schweißelektrodenpaare 2; 3 gruppenweise zusammen gefaßt und jede Gruppe mit einem eigenen Schweißstrom I_{S} versorgt. Beim dargestellten Ausführungsbeispiel weist die Vielpunkt-Widerstandsschweißmaschine 26 drei Schweißstromkreise I_{S} auf, so daß drei verschiedene Gruppen von unteren und oberen Schweißelektroden 2; 3 mit jeweils unterschiedlichen Schweißströmen I_{S} versorgt werden können. Jeder Schweißstromkreis weist einen Zwischenkreiskondensator 5', einen Wechselrichter 6 und einen Schweißstromtransformator 7 auf.

Die erfindungsgemäße Schweißstromsteuerung erzeugt aus einer dreiphasigen Netzspannung L1, L2, L3 einen Schweißstrom I_{P} großer Leistungsdichte, dessen Frequenz, wie im Ausführungsbeispiel gemäß Fig. 1 größer als die Netzfrequenz, vorzugsweise das Dreifache derselben ist. Hierbei wird die Schweißenergie vor allem aus einem Zwischenkreiskondensator 5' entnommen, dessen Kapazität vergrößert, beispielsweise verdreifacht ist.

Über den gesteuerten Eingangsgleichrichter 4 werden von der dreiphasigen Netzspannung L1, L2, L3 die Zwischenkreiskondensatoren 5' aufgeladen. Der zum Aufladen benötigte Ladestrom I_{Z} entspricht dem Netzstrom I_{N}, und dieser wird von der Netzstrommeßeinrichtung 12 gemessen und die dabei ermittelten Meßwerte I_{N} werden über die Datenleitung 13 dem Steuerungsrechner 8 zugeführt. Ein Stromregler im Steuerungsrechner 8 vergleicht den Istwert des Netzstromes I_{N} mit dem Sollwert und wirkt so auf das Steuersignal 14 für die Thyristoren 15 im Eingangsgleichrichter 4 zurück.

Die Meßeinrichtung 16 erfaßt die Zwischenkreisspannung U_{Z} und leitet den Spannungsmeßwert U_{Z} an den Steuerungsrechner 8 weiter. Sobald ein von der Maschinensteuerung 11 über die Datenleitung 24 an den Steuerungsrechner 8 gelangender Startimpuls die Schweißung auslöst, sendet der Steuerungsrechner 8 die entsprechenden Ansteuersignale 19 an die Wechselrichter 6. Der Steuerungsrechner 8 regelt den Schweißstrom I_{P} aufgrund der über die Datenleitung 21 vom Eingaberechner 10 übermittelten Vorgaben. Der Stromistwert I_{P} wird von der Meßeinrichtung 22 gemessen und die Strommeßwerte I_{P} vom Steuerungsrechner 8 verarbeitet.

Zum Unterschied von der in Fig. 1 dargestellten Anordnung wird bei dem in Fig. 3 dargestellten Ausführungsbeispiel die Energie für die Schweißung unmittelbar aus den Zwischenkreiskondensatoren 5' entnommen, während der Ladestrom I_{Z} für die Zwischenkreiskondensatoren 5', d.h. der Ausgangsstrom I_{Z} des Eingangsgleichrichters 4 und damit auch der Netzstrom I_{N}, über die Zündimpulse 14 auf einen vom Steuerungsrechner 8 ermittelten, möglichst konstanten Wert geregelt wird.

Die Fig. 4 zeigt den Verlauf der Zwischenkreisspannung U_{Z} in Abhängigkeit vom primären Schweißstrom I_{P}. Wie Fig. 4 zeigt sinkt die Zwischenkreisspannung U_{Z} während des Schweißens ab. Trotz dieses Absinkens der Zwischenkreisspannung U_{Z} wird der primäre Schweißstrom I_{P} vom Schweißstromregler des Steuerungsrechners 8 auf einen konstanten Effektivwert eingeregelt. In den Schweißpausen werden die Zwischenkreiskondensatoren 5' auf die maximale Zwischenkreisspannung U_{Z} aufgeladen. Der Steuerungsrechner 8 ermittelt aus der Differenz der Zwischenkreisspannung U_{Z} vor und nach dem Schweißvorgang und der Arbeitstaktzahl der Vielpunkt-Widerstandsschweißmaschine 26 den für das Aufladen der Zwischenkreiskondensatoren 5' notwendigen Ladestrom I_{Z} und gibt die entsprechenden Zündimpulse 14 an die Thyristoren 15 des Eingangsgleichrichters 4. Die erfindungsgemäße Schweißstromsteuerung bewirkt also eine weitgehend gleichmäßige Netzbelastung im Gegensatz zu den bisher bekannten Thyristorensteuerungen.

Wie in Fig. 3 dargestellt, ist es durchaus möglich, jeden Wechselrichter 6 mit unterschiedlichen Ansteuersignalen 19 anzusteuern, um die Größe und Dauer des primären Schweißstroms I_{P} jedes Transformators 7 dem vorgegebenen Schweißprogramm anzupassen.

Das in Fig. 5 dargestellte Schaltbild zeigt in etwas detaillierter Form die Schaltung des gesteuerten Eingangsgleichrichters 4 und des Wechselrichters 6. Der Eingangsgleichrichter 4 besteht im wesentlichen je Netzphase L1; L2; L3 aus einem Thyristor 15 und einer Gleichrichterdiode 27. Die im Wechselrichter 6 vorhandenen IGBT-Leistungstransistoren 18 bilden eine H-Brückenschaltung. Die IGBT-Treiber 28, welche die vom Steuerungsrechner 8 kommenden Ansteuersignale 19 verstärken, sind in die Wechselrichter 6 integriert.

Es versteht sich, daß die dargestellten Ausführungsbeispiele im Rahmen des allgemeinen Erfindungsgedankens verschiedentlich, insbesondere hinsichtlich der Ausgestaltung der Vielpunkt-Widerstandsschweißmaschine abgewandelt werden können. Die Anzahl der Schweißstromtransformatoren sowie die Anzahl der Schweißstromkreise je Schweißmaschine ist frei wählbar und an die herzustellenden Gittermattentypen anpaßbar.

Des weiteren ist es im Rahmen der Erfindung möglich, die Vielpunkt-Widerstandsschweißmaschinen zum Verschweißen anderer Materialien, wie z.B. verschiedene Buntmetalle, verschiedene Stahllegierungen, beispielsweise rostfreie Stähle, zu verwenden.

## Patentansprüche

1. Verfahren zum Erzeugen eines sinusförmigen, periodisch wechselnden Schweißstromes hoher Leistungsdichte für eine mit einphasigem Wechselstrom zu betreibende Vielpunkt-Widerstandsschweißmaschine, wobei der Schweißstrom mit Hilfe einer pulsbreitenmodulierten Wechselrichterschaltung (6) aus einer dreiphasigen Netzspannungsquelle erzeugt wird, **dadurch gekennzeichnet, daß** die Frequenz des Schweißstromes im Bereich zwischen der Frequenz der Netzspannungsquelle und dem Vierfachen derselben gewählt wird, und daß dem pulsbreitenmodulierten Ansteuersignal (19) für die Wechselrichterschaltung eine unsymmetrische Form erteilt wird, wobei zu Beginn jeder Halbwelle des sinusförmigen Schweißstromes (Ip) die Pulsbreite groß ist und gegen Ende der Halbwelle die Pulsbreite des Ansteuersignals (19) abnimmt.

2. Verfahren nach Anspruch 1, **dadurch gekennzeichnet, daß** die Frequenz des Schweißstromes entsprechend dem Dreifachen der Netzfrequenz gewählt wird.

3. Vielpunkt-Widerstandsschweißmaschine zum Herstellen von aus einander senkrecht kreuzenden Längs- und Querelementen bestehenden Gittermatten , mit einem Eingangsgleichrichter (4) zum Umwandeln der Netzspannung in Gleichstrom, einem Wechselrichter (6) zum Umwandeln des Gleichstromes in einen primären Schweißstrom, einem Schweißtransformator (7), einem Steuerungsrechner (8) zum Erzeugen des Ansteuersignals für den Wechselrichter (6), einem Eingaberechner (10) für das Schweißprogramm und einer Maschinensteuerung (11) zum Steuern der Schweißmaschine, **dadurch gekennzeichnet, daß** zum Erzeugen der Schweißstromsfrequenz ein über eine Datenleitung (20) mit dem Steuerungsrechner (8) verbundener Oszillator (9) mit einer zwischen der Frequenz der Netzspannungsquelle und dem Vierfachen derselben wählbaren Frequenz und zumindest ein aus einem Zwischenkondensator (5) zum Glätten des Gleichstromes, dem ansteuerbaren Wechselrichter (6) und dem Schweißtransformator (7) gebildeter Schweißstromkreis vorgesehen sind, und daß der Oszillator (9) eine unsymmetrische Kurvenform des Ansteuersignals (19) für die Wechselrichterschaltung vorgeben kann, wobei zu Begin jeder Halbwelle des sinusförmigen Schweißstromes (Ip) die Pulsbreite groß ist und gegen Ende der Halbwelle die Pulsbreite abnimmt, und wobei der Steuerrechner (8) bei der Erzeugung des Ansteuersignals (19) außerdem das freiwählbare, von dem Eingaberechner (10) an den Steuerrechner (8) weitergeleitete Schweißprogramm berücksichtigen kann, welches in Abhängigkeit von dem zu verschweißenden Material und herzustellenden Typ der Gittermatten die Größe, den Verlauf sowie die Dauer des primären Schweißstromes (Ip) festlegt.

4. Vielpunkt-Widerstandsschweißmaschine mit Schweißströmen hoher Impulse und kurzer Dauer nach Anspruch 3, **dadurch gekennzeichnet, daß** zur gleichmäßigen Netzbelastung die Schweißenergie in Form des Schweißstromes (Ip) unmittelbar und überwiegend aus einem Zwischenkreiskondensator (5') entnommen wird, der zu diesem Zweck gegenüber der üblichen Auslegung des Zwischenkreiskondensators (5) als Glättungkondensator eine verdreifachte Ladekapazität aufweist, und daß dem Zwischenkondensator (5') ein ansteuerbarer Wechselrichter (6) und ein Schweißtransformator (7) zugeordnet ist.

5. Vielpunkt-Widerstandsschweißmaschine mit einer großen Anzahl von Schweißelektrodenpaaren zum Herstellen von engmaschigen Drahtgittermatten nach Anspruch 3 oder 4, **dadurch gekennzeichnet, daß** die Schweißelektrodenpaare (2; 3) gruppenweise zusammenfaßbar sind, daß für die Entnahme des Schweißstroms (Ip) jeder Gruppe je ein Zwischenkreiskondensator (5') vorgesehen ist und daß jedem Zwischenkreiskondensator (5') ein separat ansteuerbarer Wechselrichter (6) und ein Schweißtransformator (7) zugeordnet ist.

## Claims

1. Method of generating a sinusoidal, alternating welding current with a high power density for a multi-spot resistance welding machine to be operated with a single-phase alternating current, the welding current being generated with the aid of a pulse width-modulated inverter circuit (6) from a three-phase mains voltage source, **characterised in that** the frequency of the welding current is selected in the range between the frequency of the mains voltage source and four times this frequency, and that the pulse width-modulated drive signal (19) for the inverter circuit is given an asymmetrical shape, the pulse width being large at the beginning of each half-wave of the sinusoidal welding current (Iₚ) and the pulse width of the drive signal (19) decreasing towards the end of the half-wave.

2. Method according to claim 1, **characterised in that** the frequency of the welding current is selected in accordance with three times the mains frequency.

3. Multi-spot resistance welding machine for producing gratings consisting of longitudinal and transverse elements intersecting at right angles, comprising an input rectifier (4) for converting the mains voltage into direct current, an inverter (6) for converting the direct current into a primary welding current, a welding transformer (7), a control computer (8) for generating the drive signal for the inverter (6), an input computer (10) for the welding program and a machine controller (11) for controlling the welding machine, **characterised in that** an oscillator (9) with a frequency that can be selected between the frequency of the mains voltage source and four times that frequency connected by means of a data line (20) to the control computer (8) and at least one welding current circuit formed of an intermediate capacitor (5) for smoothing the direct current, the drivable inverter (6) and the welding transformer (7) are provided in order to generate the welding current frequency and that the oscillator (9) can set an asymmetrical curve shape for the drive signal (19) for the inverter circuit, the pulse width being large at the beginning of each half-wave of the sinusoidal welding current (Ip) and the pulse width decreasing towards the end of the half-wave, the control computer (8) moreover being able to take account of the freely selectable welding program sent by the input computer (10) to the control computer (8) when the drive signal is generated, this welding program prescribing the magnitude, course and period of the primary welding current (Ip) as a function of the material to be welded and the type of gratings to be produced.

4. Multi-spot resistance welding machine comprising high-impulse, small-period welding currents according to claim 3, **characterised in that**, for uniform mains loading, the welding energy in the form of the welding current (Ip) is taken directly and principally from an intermediate circuit capacitor (5') which to this end has three times the loading capacity of the conventional design of the intermediate circuit capacitor (5) serving as a smoothing capacitor, and that a drivable inverter (6) and a welding transformer (7) are associated with the intermediate capacitor (5').

5. Multi-spot resistance welding machine comprising a large number of welding electrode pairs for producing close-meshed wire gratings according to claim 3 or claim 4, **characterised in that** the welding electrode pairs (2; 3) can be assembled in groups, that a respective intermediate circuit capacitor (5') is provided for taking the welding current (Ip) of each group and that a separately drivable inverter (6) and a welding transformer (7) are associated with each intermediate circuit capacitor (5').

## Revendications

1. Procédé pour la production d'un courant de soudage sinusoïdal, alterné périodiquement, de haute intensité pour une machine de soudage par résistance par points multiples fonctionnant avec un courant alternatif monophasé, le courant de soudage étant produit à l'aide d'un circuit onduleur (6) modulé par largeurs d'impulsions à partir d'une source de tension de réseau triphasé, **caractérisé en ce que** la fréquence du courant de soudage est choisie dans la plage comprise entre la fréquence de la source de tension de réseau et le quadruple de celle-ci, et **en ce qu'**au signal d'excitation (19) modulé par largeurs d'impulsions destiné au circuit onduleur, il est conféré une forme asymétrique, moyennant quoi, au début de chaque demi-onde du courant de soudage sinusoïdal (Ip), la largeur d'impulsion est grande et, vers la fin de la demi-onde, la largeur d'impulsion du signal de d'excitation (19) diminue.

2. Procédé selon la revendication 1, **caractérisé en ce que** la fréquence du courant de soudage est choisie pour correspondre au triple de la fréquence de réseau.

3. Machine de soudage à résistance par points multiples pour la fabrication de nappes de grillage constituées d'éléments transversaux et longitudinaux se croisant perpendiculairement entre eux, comprenant un redresseur d'entrée (4) pour convertir la tension de réseau en courant continu, un onduleur (6) pour convertir le courant continu en un courant de soudage primaire, un transformateur de soudage (7) , un calculateur de commande (8) pour produire le signal d'excitation pour l'onduleur (6), un calculateur d'entrée (10) pour le programme de soudage, et une commande de machine (11) pour commander la machine de soudage, **caractérisée en ce que**, pour produire la fréquence du courant de soudage, il est prévu un oscillateur (9) raccordé par une ligne de données (20) au calculateur de commande (8) et ayant une fréquence sélectionnable entre la fréquence de la source de tension de réseau et le quadruple de celle-ci et au moins un circuit de courant de soudage constitué par un condensateur intermédiaire (5) pour le lissage du courant continu, l'onduleur excitable (6) et le transformateur de soudage (7), et **en ce que** l'oscillateur (9) peut conférer une forme de courbe asymétrique au signal d'excitation (19) destiné au circuit onduleur, moyennant quoi, au début de chaque demi-onde du courant de soudage (Ip) sinusoïdal, la largeur d'impulsion est grande et, vers la fin de la demi-onde, la largeur d'impulsion diminue, et moyennant quoi le calculateur de commande (8), lors de la production du signal d'excitation (19), peut en outre prendre en considération le programme de soudage librement sélectionnable, transmis par le calculateur d'entrée (10) au calculateur de commande (8), qui définit la grandeur, l'allure ainsi que la durée du courant de soudage primaire (Ip) en fonction du matériau à souder et du type de nappes de grillage à fabriquer.

4. Machine de soudage par résistance par points multiples avec des courants de soudage de fortes impulsions et de courte durée selon la revendication 3, **caractérisée en ce que**, pour uniformiser la charge de réseau , l'énergie de soudage sous la forme du courant de soudage (Ip) est prélevée directement et principalement à partir d'un condensateur de circuit intermédiaire (5') qui, dans ce but, par rapport à la conception habituelle du condensateur de circuit intermédiaire (5), présente une capacité de charge triple en tant que condensateur de lissage, et **en ce qu'**au condensateur intermédiaire (5') sont affectés un onduleur excitable (6) et un transformateur de soudage (7).

5. Machine de soudage par résistance par points multiples comportant un grand nombre de paires d'électrodes de soudage pour la fabrication de nappes de grillage à mailles étroites selon la revendication 3 ou 4, **caractérisée en ce que** les paires d'électrodes de soudage (2;3) peuvent être réunies par groupes, **en ce que** pour le prélèvement du courant de soudage (Ip) de chaque groupe, il est prévu respectivement un condensateur de circuit intermédiaire (5') et **en ce qu'**à chaque condensateur de circuit intermédiaire (5') sont affectés un onduleur (6) excitable séparément et un transformateur de soudage (7).
